# EUROPÄISCHE PATENTSCHRIFT

(11) **EP 0 927 423 B1**
(45) Veröffentlichungstag und Bekanntmachung des Hinweises auf die Patenterteilung: **05.06.2002**
(21) Anmeldenummer: 97942962.8
(22) Anmeldetag: 22.09.1997
(51) Int. Cl.: G21C 9/016

(54) **AUFFANGEINRICHTUNG ZUR AUFNAHME VON HOCHTEMPERATURSCHMELZE**
COLLECTING DEVICE FOR HIGH-TEMPERATURE MOLTEN MASS
DISPOSITIF COLLECTEUR POUR LA RECEPTION DE MATIERE EN FUSION A HAUTE TEMPERATURE

(30) Priorität: 23.09.1996 DE 19638989
(43) Veröffentlichungstag der Anmeldung: 07.07.1999
(73) Patentinhaber: Framatome ANP GmbH, 91050 Erlangen (DE)
(72) Erfinder: KOLEV, Nikolay, D-91074 Herzogenaurach (DE)
(74) Vertreter: Tergau & Pohl Patentanwälte
(86) Internationale Anmeldenummer: EP9705194
(87) Internationale Veröffentlichungsnummer: WO9813831

(56) Entgegenhaltungen:
- DE-A- 2 363 844
- DE-A- 2 622 050
- DE-A- 4 319 093
- DE-C- 19 512 287
- FR-A- 2 616 578
- US-A- 5 307 390
- US-A- 5 410 577

## Beschreibung

Die Erfindung betrifft eine Auffangeinrichtung zur Aufnahme vom Hochtemperaturschmelze bei Störfällen an Kernkraftwerken, Hochöfen und dgl. mit den weiteren Merkmalen des Oberbegriffs des Patentanspruchs 1.

Insbesondere an Kernkraftwerken ist unter einem Reaktordruckbehälter in der Regel ein sogenannter Reaktorschacht angeordnet, dessen Boden als wannenartiger Auffangboden dient, wenn Hochtemperaturschmelze bei einem Störfall aus dem Reaktordruckbehälter austritt. Für diesen ernsten Störfall sind Schutzmaßnahmen zu treffen, da das unkontrollierte Ausfließen von Hochtemperaturschmelze in einen Reaktorschacht in mehrfacher Hinsicht zu erheblichen Problemen führen kann.

Zum einen kann der unmittelbare Erguß der Hochtemperaturschmelze aus dem Reaktordruckbehälter in den Reaktorschacht hinein zu einer ernsthaften Beschädigung der Reaktorschachtstrukturen führen, zum anderen treten dann relativ hochenergetische Wechselwirkungen in Form von Dampfexplosionen auf, falls im Reaktorschacht Wasser vorhanden ist. Derartige Dampfexplosionen können ebenfalls zu weitführenden apparativen und strukturellen Beschädigungen im Bereich des Reaktorschachts sowie in angrenzenden Bereichen führen.

Der Erfindung liegt die Aufgabe zugrunde, eine Auffangeinrichtung zur Aufnahme von Hochtemperaturschmelze anzugeben, die so gestaltet bzw. ergänzt ist, daß die Gefahr der Entstehung von Dampfexplosionen reduziert und gleichzeitig eine zumindest teilweise Abkühlung der austretenden Hochtemperaturschmelze erzielt wird.

Diese Aufgabe wird durch die kennzeichnenden Merkmale des Anspruchs 1 gelöst. Vorteilhafte Weiterbildungen der Auffangeinrichtung ergeben sich aus den Unteransprüchen 2 - 10.

Als Kern der Erfindung ist vorgesehen, über dem eigentlichen (untersten) Auffangboden, der beispielsweise durch einen Boden des Reaktorschachtes gebildet werden kann, mindestens ein weiteres Schmelze aufnehmendes schalen- oder wannenartiges Zwischenelement anzuordnen, das aus wärmeleitfähigem Material bestehen soll und dessen Schmelztemperatur so gewählt ist, daß es nach einer gewissen Verweilzeit der Hochtemperaturschmelze auf seiner Oberfläche durchschmilzt. Durch derartige Zwischenwandelemente wird ein vorteilhafter Doppeleffekt erreicht. Zum einen werden die Zwischenwandelemente durch die in ihnen befindliche Hochtemperaturschmelze stark erhitzt und geben aufgrund ihrer Wärmeleitfähigkeit Strahlungswärme in den außen- bzw. untenliegenden Bereich ab. Falls in solchen Bereichen eine Wasserschicht vorhanden ist, wird diese verdampfen, bevor Hochtemperaturschmelze mit dem Wasserfilm in Kontakt kommen kann. Dadurch werden Dampfexplosionen vermieden. Zum anderen wird die Schmelze durch die Aufnahme in den Zwischenwandelementen stufenweise abgekühlt. Die Zwischenwandelemente werden unter dem Temperatureinfluß der Hochtemperaturschmelze irgendwann durchschmelzen, so daß sich die Schmelze in das nächste, darunter- oder außenliegende Zwischenwandelement ergießen kann. In der nächsten weiter außenliegenden Zwischenwandelementschale wiederholt sich die gleiche Effektkombination, nämlich Vermeidung von Dampfexplosionen infolge von Wärmestrahlung und Verdampfung von darunterliegenden Wasserfilmen sowie stufenweise Abkühlung.

Grundsätzlich ist bereits nur ein schmelzeaufnehmendes Zwischenwandelement vorteilhaft, da dieses geeignet ist, den darunterliegenden Auffangboden auszutrocknen und eine erste Abkühlung der Hochtemperaturschmelze bewirkt, bevor diese zum Auffangboden bzw. Reaktorschachtboden gelangt. Besonders vorteilhaft ist es aber, mehrere Zwischenwandelemente insbesondere schalenartig oder ineinanderliegend anzuordnen, da sich dann der vorteilhafte Effekt wiederholt und eine stufige Abkühlung der Schmelze erreicht wird. Es kann von Vorteil sein, die Beabstandung der zwischenwandelemente unterschiedlich so zu gestalten, daß die Abstände von oben nach unten bzw. von innen nach außen abnehmen. Es bietet sich auch an, die Zwischenwandelemente aus unterschiedlichen Materialien und mit unterschiedlichen Schmelztemperaturen zu fertigen. Insbesondere sollte ein unterstes Zwischenwandelement so beschaffen sein, daß seine Schmelztemperatur über der noch verbleibenden Temperatur der sich in es ergießenden Schmelzmasse liegt.

Mit Vorteil bestehen die Zwischenwandelemente aus Metall, z.B. aus 1 - 2 cm starken Metallschalen. Unter Umständen können wärmeabführende Zwischenmittel oder Kühlelemente vorgesehen sein, deren Ausgestaltung dem Fachmann überlassen bleibt, je nach dem, welcher Abkühlgrad pro Zwischenwandelementstufe angestrebt wird.

Zur Aufnahme und Abkühlung von Hochtemperaturschmelze bei Störfällen an Kernkraftwerken, Hochöfen und dgl. ist zunächst in an sich bekannter Weise vor geseken, daß unter dem die Hochtemperaturschmelze enthaltenen Behältnis zur Aufnahme der Hochtemperaturschmelze bei Auftreten eines Störfalls ein Auffangboden angeordnet ist, beispielsweise der Reaktorschachtboden.

Bei Auftreten eines Störfalls ist dann erfindungsgemäß vorgesehen, daß sich die aus dem Behältnis austretende Hochtemperaturschmelze zunächst in ein erstes zwischenwandelement ergießt, dort abgefangen und etwas heruntergekühlt wird und das Zwischenwandelement unter dem Einfluß der Hochtemperaturschmelze durchschmilzt sowie die bereits etwas abgekühlte Hochtemperaturschmelze nach unten abgibt, gegebenenfalls in weitere, eine Abkühlung bewirkende Zwischenwandelemente.

Aufgrund der Wärmestrahlung der mit Hochtemperaturschmelze befüllten Zwischenwandelemente werden Wasserrückstände in darunterliegenden Zwischenwandelementen oder Schachtbereichen erhitzt und verdampft, wodurch Dampfexplosionen vermieden werden können.

Die Erfindung ist anhand eines Ausführungsbeispiels in den Zeichnungsfiguren näher erläutert. Diese zeigen:
- FIG 1: eine schematisch dargestellte Auffangeinrichtung unter einen Reaktordruckbehälter im Teilschnitt;
- FIG 2: eine Darstellung gemäß FIG 1, wobei im Reaktordruckbehälter Schmelze enthalten ist;
- FIG 3: eine Darstellung gemäßen FIG 1 und 2, bei der die Schmelze die Reaktordruckbehälterwandung durchbrochen hat.

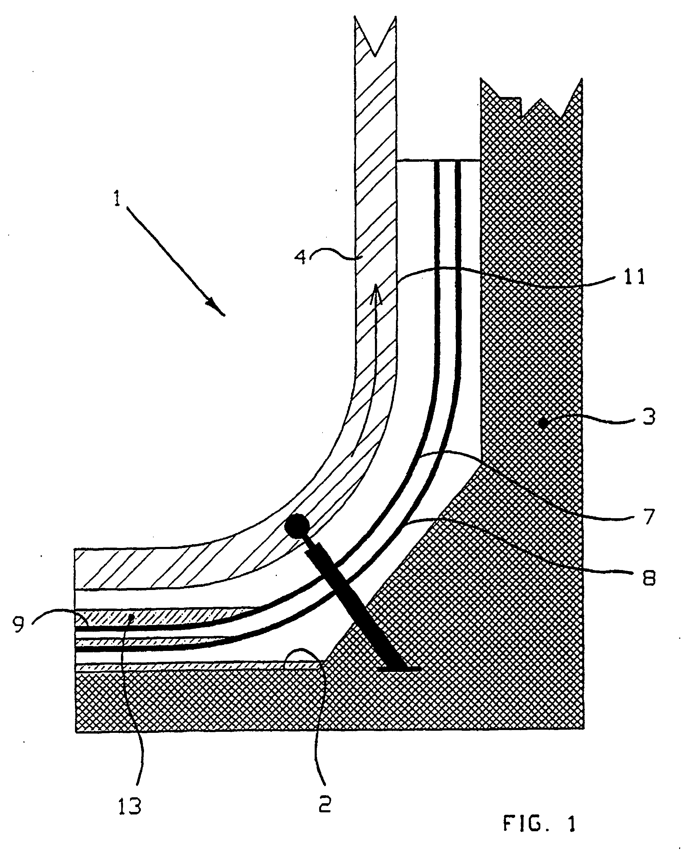

In FIG 1 ist eine Auffangeinrichtung 1 dargestellt, die zur Aufnahme von Hochtemperaturschmelze 5 geeignet ist und einen im wesentlichen wannenartigen Auffangboden 2 aufweist, der durch eine Schachtwandung 3 gebildet wird. In einem Behältnis, nämlich einem Reaktordruckbehälter 4 kann sich bei Auftreten eines Störfalls Schmelze 5 ansammeln, die eine sehr hohe Temperatur aufweist. Der Reaktordruckbehälter 4 wird durch Schutzelemente 6 (stark vereinfacht dargestellt) im Fall eines Versagens der Kalotte gestützt.

Über dem Auffangboden 2 ist eine Mehrzahl von zur Aufnahme der Hochtemperaturschmelze 5 geeigneten Zwischenwandelementen 7, 8 angeordnet, die einen schalen- oder wannenartigen Aufbau haben, aus wärmeleitfähigem Material, nämlich Metall bestehen und deren Schmelztemperatur so gewählt ist, daß sie nach einer gewissen Verweildauer der Hochtemperaturschmelze 5 auf ihrer Oberfläche 9 durchschmelzen. Die Zwischenwandelemente 7, 8 weisen unterschiedliche Abstände voneinander auf, d.h. der Abstand der angeordneten Zwischenwandelemente 7, 8 voneinander von oben nach unten abnimmt.

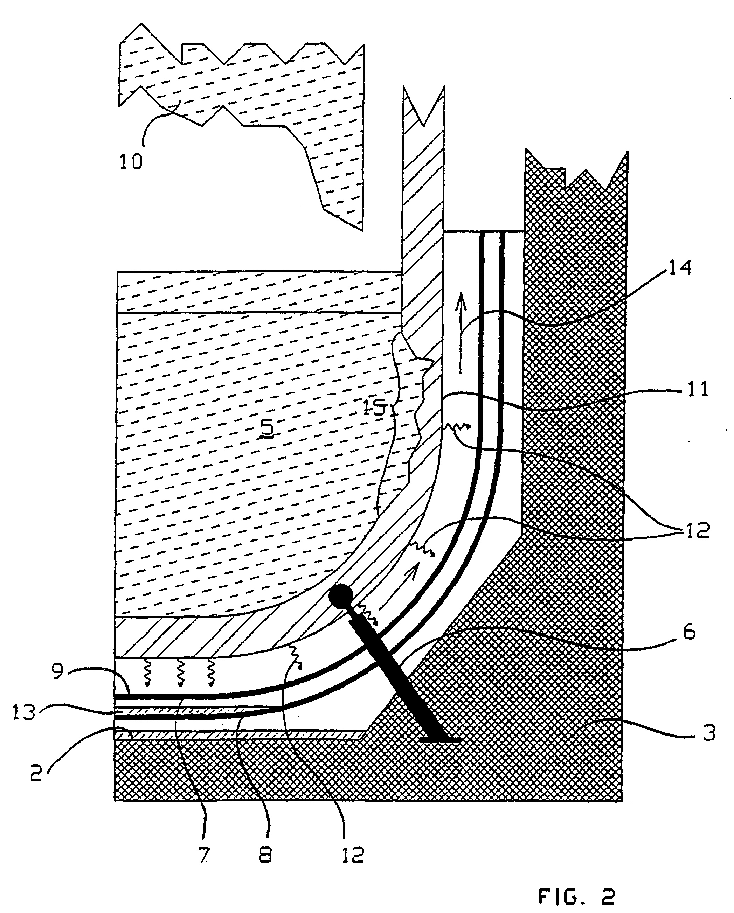

In FIG 2 ist nunmehr ein Zustand dargestellt, der als besonders kritisch eingestuft wird. Nach Auftreten einer Störung befindet sich Hochtemperaturschmelze 5 unmittelbar innerhalb des Reaktordruckbehälters 4, weil der nur schematisch mit Ziff. 10 angedeutete Reaktorkern geschmolzen ist. Die Hochtemperaturschmelze 5 erhitzt den Reaktordruckbehälter 4 derartig stark, daß die von dessen Außenwandung 11 ausgehende Wärmestrahlung (Pfeile 12) die Oberfläche 9 des Zwischenwandelementes 7 austrocknet, so daß ein ursprünglich darin befindlicher Wasserfilm 13 verdampft und die Feuchtigkeit in Pfeilrichtung 14 abgeführt wird.

Im Bereich 15 ist angedeutet, daß die Wandung des Reaktordruckbehälters 4 unter dem Einfluß der Hochtemperaturschmelze 5 zerstört wird und nach einer gewissen Zeit Schmelze durch eine Austrittsöffnung 16 in das Zwischenwandelement 7 freigegeben wird, so daß der Abstandsbereich 17 mit Schmelze gefüllt wird. Der ursprünglich in diesem Bereich vorhandene Wasserfilm 13 ist vorher ausgetrocknet worden, Dampfexplosionen werden somit vermieden.

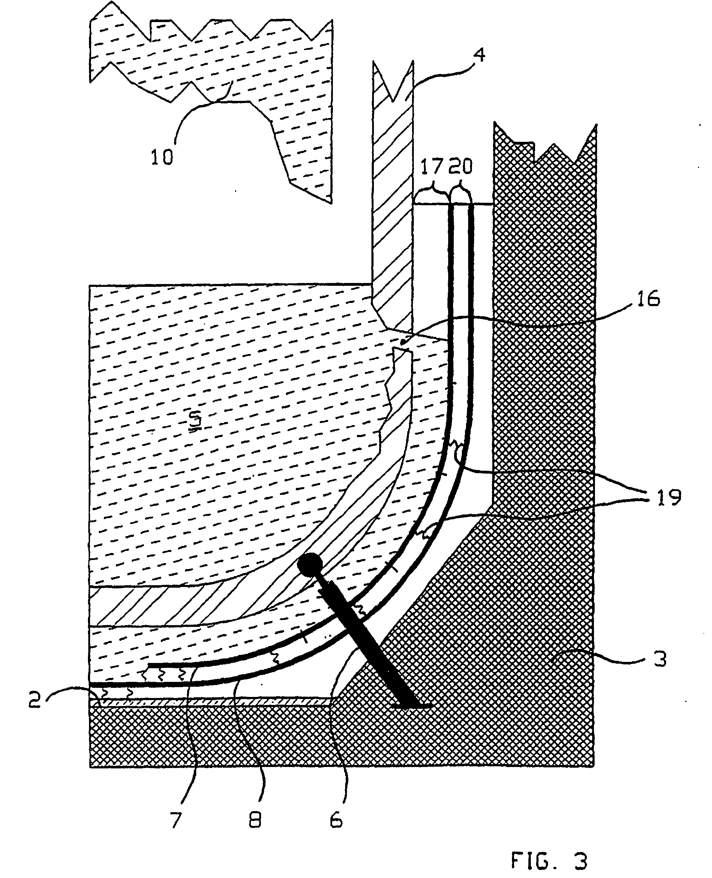

Aus FIG 3 ist ersichtlich, daß sich aufgrund der im Abstandsbereich 17 befindlichen Hochtemperaturschmelze 5 auch das Zwischenwandelement 7 so stark zu erwärmen beginnt, daß der Wasserfilm 13 im Bodenbereich des Zwischenwandelements 8 verdampft wird, was durch Strahlungspfeile 19 angedeutet ist. Nach einer gewissen Verweilzeit der Schmelze schmilzt auch das Zwischenwandelement 8 durch, so daß sich Schmelze in den Abstandsbereich 20 ergießen kann, der aber aufgrund der von dem Zwischenwandelement 7 ausgehenden Wärmestrahlung (Pfeile 19) bereits ausgetrocknet ist.

Dieser Effekt wiederholt sich entsprechend der Anzahl der Zwischenwandelemente 7, 8. Ein letztes, außenliegendes Zwischenwandelement 7 bzw. 8 kann auch so gestaltet sein, daß nicht die Gefahr besteht, daß es zu einem Durchschmelzen dieses weiteren, in den Zeichnungsfiguren nicht dargestellten Zwischenwandelementes 7, 8 kommt.

## Patentansprüche

1. Auffangeinrichtung (1) zur Aufnahme von Hochtemperaturschmelze (5) bei Störfällen an Kernkraftwerken, Hochöfen und dgl., mit einem im wesentlichen wannenartigen Auffangboden (2), anordenbar unter einem Behältnis (z.B. Reaktordruckbehälter (4)), das bei Störfällen Hochtemperaturschmelze (5) abgibt,
**gekennzeichnet durch** folgende Merkmale:
a) über dem Auffangboden ist mindestens ein schmelzeaufnehmendes, schalen- oder wannenartiges Zwischenwandelement (7, 8) angeordnet,
b) das Zwischenwandelement (7, 8) besteht aus wärmeleitfähigem Material und
c) das Zwischenwandelement (7, 8) ist so ausgebildet, daß es nach einer Verweilzeit der Hochtemperaturschmelze (5) auf seiner Oberfläche (9) durchschmilzt, wobei während dieser Verweilzeit möglicherweise unter dem Zwischenwandelement (7, 8) befindliches Wasser (13) erhitzt und verdampft wird.

2. Auffangeinrichtung nach Anspruch 1,
**dadurch gekennzeichnet, daß** mehrere Zwischenwandelemente (7, 8) übereinander angeordnet sind.

3. Auffangeinrichtung nach Anspruch 2,
**dadurch gekennzeichnet, daß** Zwischenwandelemente (7, 8) schalenartig übereinander oder ineinander liegen.

4. Auffangeinrichtung nach einem der Ansprüche 1 - 3,
**dadurch gekennzeichnet, daß** die Zwischenwandelemente (7, 8) unterschiedliche Abstandsbereiche zwischen sich aufweisen.

5. Auffangeinrichtung nach einem der vorhergehenden Ansprüche,
**dadurch gekennzeichnet, daß** die Abstände (17, 20) von oben nach unten abnehmen.

6. Auffangeinrichtung nach einem der vorhergehenden Ansprüche,
**dadurch gekennzeichnet, daß** die Zwischenwandelemente (7, 8) aus unterschiedlichen Materialien mit unterschiedlichen Schmelztemperaturen gefertigt sind.

7. Auffangeinrichtung nach einem der vorhergehenden Ansprüche,
**dadurch gekennzeichnet, daß** ein weiteres, unteres Zwischenwandelement vorgesehen ist, das der sich in es ergießenden Hochtemperaturschmelze (5) standhält.

8. Auffangeinrichtung nach einem der vorhergehenden Ansprüche,
**dadurch gekennzeichnet, daß** die Zwischenwandelemente (7, 8) aus Metall bestehen.

9. Auffangeinrichtung nach einem der vorhergehenden Ansprüche,
**dadurch gekennzeichnet, daß** zumindest teilweise zwischen den Zwischenwandelementen (7, 8) ein wärmeabführendes Zwischenmittel angeordnet ist.

10. Auf fangeinrichtung nach einem der vorhergehenden Ansprüche,
**dadurch gekennzeichnet, daß** die Zwischenwandelemente (7, 8) sowie die dazwischenliegend Abstandsbereiche (17, 20) kühlbar sind.

11. Kernreaktoranlage mit einer Auffangeinrichtung (1) nach einem der Ansprüche 1 bis 10.

## Claims

1. Collecting device (1) for taking up high-temperature molten mass (5) in the event of abnormal occurrences at nuclear power stations, blast furnaces and the like, having a substantially tank-like collecting base (2), which can be arranged underneath a receptacle (for example a reactor pressure vessel (4)) that releases high-temperature molten mass (5) in the event of abnormal occurrences,
**characterized by** the following features:
a) at least one partition wall element (7, 8), which takes up molten mass and is shaped like a shell or tank, is arranged above the collecting base;
b) the partition wall element (7, 8) consists of heat-conducting material; and
c) the partition wall element (7, 8) is formed in such a way that it melts through after a dwell time of the high-temperature molten mass (5) on its surface (9), with any water (13) that might possibly be located underneath the partition wall element (7, 8) during this dwell time heating and evaporating thereby.

2. Collecting device according to claim 1,
**characterized in that** a plurality of partition wall elements (7, 8) are arranged one on top of the other.

3. Collecting device according to claim 2,
**characterized in that** partition wall elements (7, 8) lie in a shell-like manner one on top of the other or inside each other.

4. Collecting device according to one of claims 1 - 3, **characterized in that** the partition wall elements (7, 8) have different interspace areas between them.

5. Collecting device according to one of the preceding claims, **characterized in that** the interspaces (17, 20) diminish from the top to the bottom.

6. Collecting device according to one of the preceding claims, **characterized in that** the partition wall elements (7, 8) are made of different materials with different melting temperatures.

7. Collecting device according to one of the preceding claims, **characterized in that** a further lower partition wall element is provided that withstands the high-temperature molten mass (5) that is being discharged into it.

8. Collecting device according to one of the preceding claims, **characterized in that** the partition wall elements (7, 8) are made of metal.

9. Collecting device according to one of the preceding claims, **characterized in that** an intermediate heat-dissipating means is arranged at least in part between the partition wall elements (7, 8).

10. Collecting device according to one of the preceding claims, **characterized in that** the partition wall elements (7, 8) and also the interspace areas (17, 20) lying in between can be cooled.

11. Nuclear reactor plant having a collecting device (1) according to one of claims 1 to 10.

## Revendications

1. Dispositif (1) collecteur pour la réception de matière (5) en fusion à haute température s'il se produit des incidents dans des centrales nucléaires, des hauts fourneaux et analogue, comprenant un fond de collecteur sensiblement en forme de cuvette, qui peut être disposé sous un récipient (par exemple une cuve (4) sous pression de réacteur) qui, en cas d'incidents, donne des matières (5) fondues à haute température,
**caractérisé par** les caractéristiques suivantes :
a) il est disposé sur le fond de collecteur au moins un élément (7,8) de paroi intermédiaire de réception de la masse fondue du type à coquille ou à cuvette,
b) l'élément (7,8) de paroi intermédiaire est en matériau conducteur de la chaleur et
c) l'élément (7,8) de paroi intermédiaire est constitué de façon à ce que sa surface (9) fonde après une certaine durée de séjour de la matière (5) fondue à haute température, de l'eau (13) se trouvant éventuellement sous l'élément (7,8) de paroi intermédiaire étant chauffée et s'évaporant pendant cette durée de séjour.

2. Dispositif collecteur suivant la revendication 1,
**caractérisé en ce que** plusieurs éléments (7,8) de paroi intermédiaire sont superposés.

3. Dispositif collecteur suivant la revendication 2,
**caractérisé en ce que** des éléments (7,8) de paroi intermédiaire sont superposés en forme de coquille ou sont emboîtés les uns dans les autres en forme de coquille.

4. Dispositif collecteur suivant l'une des revendications 1 à 3,
**caractérisé en ce que** les éléments (7,8) de paroi intermédiaire ont entre eux des intervalles différents.

5. Dispositif collecteur suivant l'une des revendications précédentes,
**caractérisé en ce que** les intervalles (17,20) diminuent de haut en bas.

6. Dispositif collecteur suivant l'une des revendications précédentes,
**caractérisé en ce que** les éléments (7,8) de paroi intermédiaire sont en des matériaux différents ayant des points de fusion différents.

7. Dispositif collecteur suivant l'une des revendications précédentes,
**caractérisé en ce qu'**il est prévu un autre élément de paroi intermédiaire inférieur qui résiste à la matière (5) fondue à haute température qui s'y écoule.

8. Dispositif collecteur suivant l'une des revendications précédentes,
**caractérisé en ce que** les éléments (7,8) de paroi intermédiaire sont en métal.

9. Dispositif collecteur suivant l'une des revendications précédentes,
**caractérisé en ce qu'**un moyen intermédiaire d'évacuation de la chaleur est interposé au moins partiellement entre les éléments (7,8) de paroi intermédiaire.

10. Dispositif collecteur suivant l'une des revendications précédentes,
**caractérisé en ce que** les éléments (7,8) de paroi intermédiaire ainsi que les intervalles (17,20) entre eux peuvent être refroidis.

11. Centrale à réacteur nucléaire comprenant un dispositif (1) collecteur suivant l'une des revendications 1 à 10.
